# EUROPEAN PATENT SPECIFICATION

(11) **EP 1 963 112 B1**
(45) Date of publication and mention of the grant of the patent: **11.11.2009**
(21) Application number: 05850351.7
(22) Date of filing: 23.12.2005
(51) Int. Cl.: B60C 9/20

(54) **HEAVY LOAD VEHICLE TIRE**
LUFTREIFEN FÜR SCHWERLASTFAHRZEUG
PNEU POUR VEHICULE POIDS LOURDS

(43) Date of publication of application: 03.09.2008
(73) Proprietor: PIRELLI TYRE S.p.A., 20126 Milano (IT)
(72) Inventor: MINOLI, Claudio, 20126 Milano (IT); MONTANARO, Fabio, 20126 Milano (IT); PIZZORNO, Tommaso, 20126 Milano (IT)
(74) Representative: Giannesi, Pier Giovanni
(86) International application number: PCT/EP2005/013996
(87) International publication number: WO 2007/073753

(56) References cited:
- US-A- 4 526 217
- PATENT ABSTRACTS OF JAPAN vol. 015, no. 225 (M-1122), 10 June 1991 (1991-06-10) & JP 03 067703 A (BRIDGESTONE CORP), 22 March 1991 (1991-03-22)
- PATENT ABSTRACTS OF JAPAN vol. 012, no. 371 (M-748), 5 October 1988 (1988-10-05) & JP 63 121504 A (SUMITOMO RUBBER IND LTD), 25 May 1988 (1988-05-25)

## Description

The present invention relates to a heavy load vehicle tire.

More in particular the present invention relates to a heavy load vehicle tire, preferably to a super single wide base heavy load vehicle tire, comprising an improved belt structure.

More preferably, said heavy load vehicle tire may be used in trucks, trialers, or buses.

As it is known, a tire usually comprises a carcass structure of a substantially toroidal shape, having opposite lateral edges associated with respective right-hand and left-hand bead structures; a belt structure applied in a radially external position with respect to said carcass structure; a tread band radially superimposed on said belt structure; a pair of sidewalls applied laterally on opposite sides with respect to said carcass structure.

It is well known that the belt structure may exert a very important influence both on the performances of the tire (for example, in terms of prompt response to steering and of direction steadiness) and on the service life thereof, in particular on the wear speed and evenness of the tread band. For example, an uneaven wear of the tread band adversely affects the drive behaviour of the tire giving rise to vibrations and continuous deviations of the vehicle from its trajectory.

Super single wide base heavy load vehicle tires having a low aspect ratio usually replacing dual mounted tires on a specific axle, have been used for years on trailers. Such tires are usually of size 385/65R22.5 or 385/55R22.5 and have a maximum load-carrying capacity of about 4500 kg.

Over the years these super single wide base heavy load vehicle tires have been advantageously used on trucks in the steering position because they had a higher mileage.

Recently, in order to further lightening the vehicle weight and increasing the volume of cargo available, it became of interest to use super single wide base heavy load vehicle tires also in the drive positions. Tires in the drive position have to bear part of the trailer load and must have an increased load capacity. Tire standards define a load capacity of about 5800 kg and a maximum speed of about 110 km/h. These tires have very low aspect ratio and are usually of size 495/45R22.5. Drive tires are subjected to harsh service conditions and conventional belt structures may cause problems in terms of both performances of the tire and service life thereof.

For example, United States Patent US 5,772,810 relates to a tire comprising a radial carcass reinforcement surmonted by a crown reinforcement formed, in direction radially from the inside to the outside, of at least one triangulation ply of non-stretchable metal wires or cables which form an angle of between 60° and 90° with the circumferential direction and two working plies formed of non-stretchable metal wire or cables crossed from one ply to the next and forming an angle of between 10° and 45° with the circumferential direction, said first working ply which is radially adjacent on the outside of the radially outermost triangulation ply has a width less than the width of said triangulation ply, the second working ply, which is radially above the first working ply, having an axial width greater than the width of the triangulation ply, and the edges of said second working ply covering the edges of said triangulation ply so that the radial distances between the respective wires or cables of the two plies at the level of said edges are at most equal to 1.5 mm over an axial distance at least equal to 2% of the axial width of the triangulation ply. A variant of said tire is disclosed which further comprises an additional ply including metal elements oriented in a substantially circumferential direction, said additional ply having an axial width of less than the width of the first working ply and located radially between the two working ply. The abovementioned tire is said to be particularly useful for heavy vehicles and to have an improved crown reinforcement and, consequently, an improved service life.

United States Patent US 6,659,147 relates to a tire with radial carcass reinforcement, having a crown reinforcement comprising at least two working crown plies made up of inextensible wire reinforcing elements, crossed from one ply to the next by forming opposite but equal angles with the circumferential direction ranging from between 10° and 60°, and an axially continuous additional ply, the additional ply being placed between radially adjacent ones of the at least two working crown plies and being made up of wire reinforcing elements of greater diameter than that of the reinforcing elements of the radially adjacent ones of the working plies and having an axial width equal to at least 50% of the maximum axial width of the carcass reinforcement, wherein the reinforcing elements of the additional ply are steel and are corrugated in the plane of the ply, the corrugation being parallel to one another, in phase and oriented parallel to the circumferential direction, so that the ratio of amplitude to wavelength of the corrugated elements decreases axially from the center to the edges of said additional ply, reaching a minimum at said edges. The abovementioned tire is said to be particularly useful for heavy vehicles and to have an improved crown reinforcement endurance from the standpoint of resistance to separation between carcass reinforcement and crown reinforcement, resistance to separation between the working crown plies and fatigue strength of the circumferentially oriented cords of the additional ply.

United States Patent US 6,619,357 relates to a pneumatic super single radial truck tire comprising at least one pair of parallel annular beads, at least one carcass ply wrapped around said beads, a crown reinforcing structure comprising adjacent spliced belt plies reinforced with steel cords and at least one helically wound belt ply reinforced with straight high elongation steel cords, disposed over said at least one carcass ply in a crown area of said tire, a tread disposed over said crown reinforcing structure, and sidewall disposed between said tread and said beads, wherein said at least one helically wound belt ply is located between the at least one carcass ply and the radially innermost spliced belt ply. The abovementioned tire is said to be endowed with:
- an improved crown area durability;
- an improved footprint shape and footprint pressure distribution;
- excellent high speed properties and improved wear properties;
- an optimized trade-off between handling and durability.

The Applicant has noticed that sometimes, during use of the tire, in particular in correspondence of the external edges of the belt structure, some premature and dangerous separations of the belt structure layers from each other and from the carcass may occur, which results in the tire becoming out of use. Moreover, the Applicant has noticed that, in particular at the shoulder regions of the tire which are usually subjected to continuous microsliding on the asphalt, a premature wear may occur, which results in an uneven wear of the tread band. Furthermore, the Applicant has noticed that, in particular in the case of tires used in the drive position, an irregular wear may also occur in each block, in particular between the centre and the edges of the blocks which are made on the rolling surface of the tread band.

Japanese patent application JP-A-03-067703 discloses a tire which shows the features of the preamble of claim 1.

The Applicant has faced the problem of providing a tire, preferably a super single wide base heavy load vehicle tire, having both an improved structural integrity of the belt structure and an improved wear evenness of the tread band.

The Applicant has now found that it is possible to obtain a tire having both an improved structural integrity of the belt structure and an improved wear evenness of the tread band by applying at least one pair of lateral reinforcing layers substantially simmetrically arranged with respect to the equatorial plane of the tire and applied in correspondence of the axially external portions of the tire belt structure, said lateral reinforcing layers incorporating reinforcing elements oriented in a substantially circumferential direction, said lateral reinforcing layer being positioned under at least two crossed belt layers. Besides the above reported improvements, the tire so obtained shows both an improved footprint shape and footprint pressure distribution. Moreover, said tire is endowed with good high speed properties. Furthermore, said tire shows a good balance between handling and durability. Moreover, said tire may be retreaded more than once so allowing a decrease on the maintenance costs of the trucks fleets. Furthermore, thanks to the position of said lateral reinforcing layers, a premature deterioration of the belt package and of the tire itself is avoided. As a matter of fact, when a reinforcing layer incorporating reinforcing element oriented in a substantially circumferential direction is positioned over the carcass ply in a crown area of the tire, said reinforcing layer is subjected to a compression. As known, said reinforcing elements are usually steel cords formed by elementary wires stranded together. If subjected to compression, the elementary wires of the reinforcing elements, tend to separate one from the other so as to cause tearing of the elastomeric material included in said reinforcing layer. Such tearing, because of the continuos stresses to which the belt package is subjected, propagates so causing detachment between the different belt layers and consequently a premature deterioration of the belt package and of the tire itself.

According to a first aspect, the present invention relates to a tire comprising:
- a carcass structure comprising at least one carcass ply, of a substantially toroidal shape, having opposite lateral edges associated with respective right-hand and left-hand bead structures;
- a belt structure applied in a radially external position with respect to said carcass structure;
- a tread band radially superimposed on said belt structure;
- two sidewalls, each sidewall being applied laterally on opposite sides with respect to said carcass structure;
said belt structure comprising:
- at least one pair of lateral reinforcing layers substantially simmetrically arranged with respect to the equatorial plane of said tire and applied in correspondence of the axially external portions of said tire belt structure, said lateral reinforcing layers incorporating reinforcing elements oriented in a substantially circumferential direction;
- a first belt layer, radially superimposed on said at least one pair of lateral reinforcing layers, provided with reinforcing elements parallel to one another and inclined with respect to the equatorial plane of said tire;
- a second belt layer radially superimposed on said first belt layer, provided with reinforcing elements parallel to one another and inclined with respect to the equatorial plane of said tire in a direction opposite to those of said first belt layer;
- an external belt layer applied in a radially external position with respect to said first and said second belt layers, said external belt layer being provided with reinforcing elements parallel to one another.

Preferably, said tire is a super single wide base heavy load vehicle tire.

For the aim of the present description and of the claims which follows the terms "super single wide base heavy load vehicle tire" refers to a tire which replaces dual mounted tires on a specific axle having a section width exceeding the section width of one of the previously dual mounted tires but inferior to the dual assembly width. Said "super single wide base heavy load vehicle tire" usually have a section width (W) higher than or equal to 350 mm, preferably of from 380 mm to 500 mm, and an aspect ratio [(H/W) x 100], which is defined as the ratio between the tire section height (H) and the tire section widht (W) multiplied by 100, lower than or equal to 80, preferably of from 30 to 70. For the aim of the present description and of the claims which follows the terms "section height" refers to the radial distance from the nominal rim diameter to the outer diameter of the tire at its equatorial plane.

For the aim of the present description and of the claims which follows the terms "section width" refers to the maximum linear distance parallel to the axis of the tire and between the exterior of its sidewalls.

Said "section height" and said "section width" may be determined according to ETRTO Standard.

According to one preferred embodiment, each of said lateral reinforcing layers has an axial width lower than or equal to 40%, more preferably of from 5% to 30%, still more preferably of from 10% to 25%, with respect to the axial width of the belt structure, said axial width corresponding to the axial width of the wider belt layer.

According to a further preferred embodiment, said at least one pair of lateral reinforcing layers are positioned directly in contact with said carcass structure.

According to a further preferred embodiment, at least one belt underlayer is positioned between said belt structure and said carcass structure.

According to a further preferred embodiment, said at least one pair of lateral reinforcing layers have their axially external edges staggered axially inwards with respect to the corresponding axially external edges of said first belt layer.

According to one preferred embodiment, said first belt layer has its axially external edges staggered axially inwards with respect to the corresponding axially external edges of said second belt layer.

According to one preferred embodiment, said external belt layer has its axially external edges staggered axially inwards with respect to the corresponding axially external edges of said second belt layer.

According to a further preferred embodiment, said external belt layer has its axially external edges at an axially outward position with respect to the axially internal edges of said at least one pair of lateral reinforcing layers.

According to a further preferred embodiment, said external belt layer has its axially external edges at a position radially corresponding to the axially external edges of said at least one pair of lateral reinforcing layers.

According to a further preferred embodiment, the reinforcing elements of said external belt layer are inclined with respect to the equatorial plane of said tire.

According to a further preferred embodiment, said reinforcing elements are inclined in the same direction of the reinforcing element of said first belt layer.

According to a further preferred embodiment, said reinforcing elements are inclined in the same direction of the reinforcing element of said second belt layer.

According to a further preferred embodiment, the reinforcing elements of said external belt layer are oriented in a substantially circumferential direction.

Said external belt layer may acts as a protection layer from stones or gravel possibly entrapped into the tread grooves and which may cause damages to the belt structure and even to the carcass structure.

According to one preferred embodiment, said belt structure further comprises at least one additional pair of lateral reinforcing layers radially superimposed on said second belt layer substantially simmetrically arranged with respect to the equatorial plane of said tire and applied in correspondence of the axially external portions of said tire belt structure, said lateral reinforcing layers incorporating reinforcing elements oriented in a substantially circumferential direction.

According to a further preferred embodiment, each of said lateral reinforcing layers is placed side-by-side with respect to said external belt layer.

According to a further preferred embodiment, said at least one additional pair of.lateral reinforcing layers have their axially external edges staggered axially inwards with respect to the corresponding axially external edges of at least one of said first and said second belt belt layers.

According to a further preferred embodiment, said at least one additional pair of lateral reinforcing layers have their axially external edges in correspondence of the axially external edges at least one of said first and said second belt belt layers.

According to one preferred embodiment, said belt structure further comprise an additional belt layer (hereinafter referred to as a "third belt layer"), radially superimposed on said second belt layer, said third belt layer being provided with reinforcing elements arranged parallel to one another and inclined with respect to the equatorial plane of said tire. Preferably, said reinforcing elements are inclined with respect to the equatorial plane of said tire in a direction opposite to those of said second belt layer.

According to a further preferred embodiment, said third belt layer has its axially external edges staggered axially inwards with respect to the corresponding axially external edges of said second belt layer.

For the purpose of the present description and of the claims which follow, except in the operating examples, or where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

Additional features and advantages of the invention will be better apparent from the following description of some preferred embodiments of a tire according to the present invention, which description is made, by way of non-limiting example, with reference to the attached Fig. 1-4 wherein:
- Fig. 1 is a view in cross-section of a portion of a tire according to the present invention;
- Fig. 2 and Fig. 3 are an enlarged view in cross-section of a portion of further embodiments of a tire according to the present invention.

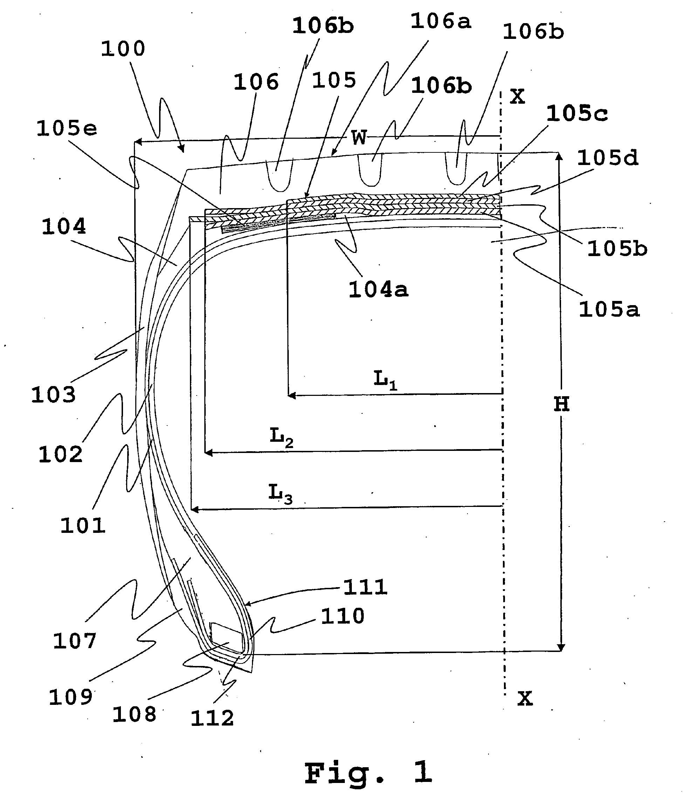

For simplicity, Fig. 1 shows only a portion of the tire, the remaining portion not represented being identical and simmetrically arranged with respect to the equatorial plane (x-x) of the tire. The tire (100) comprises at least one carcass ply (101), the opposite lateral edges of which are associated with respective bead structures comprising at least one bead core (108) and at least one bead filler (107). The association between the carcass ply (101) and the bead core (108) is achieved here by folding back the opposite lateral edges of the carcass ply (101) around the bead core (108) so as to form the so-called carcass back-fold (112) as represented in Fig. 1.

Alternatively, the conventional bead core (108) may be replaced with at least one annular insert formed from rubberized wires arranged in concentric coils (not represented in Fig. 1) (see, for example, European Patent Applications EP 928,680 or EP 928,702, both in the name of the Applicant). In this case, the carcass ply (101) is not back-folded around said annular inserts, the coupling being provided by a second carcass ply (not represented in Fig. 1) applied externally over the first.

The carcass ply (101) generally consists of a plurality of reinforcing elements arranged parallel to each other and at least partially coated with a layer of a crosslinked elastomeric material. These reinforcing elements are usually made of steel wires stranded together, coated with a metal alloy (for example copper/zinc, zinc/manganese, zinc/molybdenum/cobalt alloys and the like) or of textile fibres, for example rayon, nylon or polyethylene terephthalate.

The carcass ply (101) is usually of radial type, i.e. it incorporates reinforcing elements arranged in a substantially perpendicular direction relative to a circumferential direction. The bead core (108) is enclosed in a bead (111), defined along an inner circumferential edge of the tire (100), with which the tire engages on a rim (not represented in Fig. 1) forming part of a vehicle wheel. The space defined by each carcass back-fold (112) contains a bead filler (107) usually made of a crosslinked elastomeric material, wherein the bead core (108) is embedded.

An antiabrasive strip (109) is usually placed in an axially external position relative to the carcass back-fold (112).

A reinforcing layer (110), known as "flipper", is usually wound around the core (108) and the bead filler (107) so as to at least partially envelope them.

A belt structure (105) is applied along the circumference of the carcass ply (101). In the particular embodiment in Fig. 1, the belt structure (105) comprises three belt layers (105a), (105b) and (105d), which are radially superimposed and which incorporate a plurality of reinforcing elements, typically metal cords, said reinforcing elements being parallel to each other in each layer and intersecting with respect to the adjacent layer, inclined preferably in a symmetrical manner with respect to the equatorial plane (x-x) of the tire at an angle of from 10° to 40°, preferably of from 12° to 30°, and coated and welded together by means of a crosslinked elastomeric material. Preferably, said reinforcing elements have a density of from 30 cords/dm to 80 cords/dm, preferably of from 40 cords/dm to 65 cords/dm, measured on said three belt layers (105a), (105b) and (105d), in a circumferential direction, close to the equatorial plane (x-x) of the tire (100).

Furthermore, the belt structure (105) comprises a lateral reinforcing layer (105e), commonly known as "zero-degree reinforcing layer", radially superimposed on the carcass ply (101). Said lateral reinforcing layer (105e) generally incorporates a plurality of reinforcing elements, typically metal cords with a breakage elongation value of from 3% to 10%, preferably of from 3.5% to 7%, said reinforcing elements being oriented in a substantially circumferential direction, thus forming an angle of a few degrees (i.e. 0°) with respect to the equatorial plane (x-x) of the tire, and coated and welded together by means of a crosslinked elastomeric material. Preferably, said reinforcing elements have a density of from 30 cords/dm to 80 cords/dm, preferably of from 40 cords/dm to 60 cords/dm, measured on said lateral reinforcing layer (105e), in a circumferential direction, close to the equatorial plane (x-x) of the tire (100).

In the particular embodiment of Fig. 1, said lateral reinforcing layer (105e) is positioned directly in contact with said carcass ply (101).

In the particular embodiment of Fig. 1, said lateral reinforcing layer (105e) has its axially external edge staggered axially inwards with respect to the corresponding axially external edge of said first belt layer (105a). Alternatively, said lateral reinforcing layer (105e) may have its axially external edge:
- staggered axially outwards with respect to the corresponding axially external edges of said first belt layer (105a) (not represented in Fig. 1); or
- in correspondence of the axially external edge of said first belt layer (105a) (not represented in Fig. 1); or
- in correspondence of the axially external edge of the wider belt layer (not represented in Fig. 1). Said lateral reinforcing layer (105e) may be obtained by helicoidally winding at least one continuous elongated element comprising one or more reinforcing cord on said at least one carcass ply.

Moreover, the belt structure (105) comprises an external belt layer (105c) radially superimposed on the third belt layer (105d) provided with reinforcing elements, typically metal cords, said reinforcing elements being arranged parallel to one another, inclined with respect to the equatorial plane (x-x) of the tire by an angle of from 10° to 70°, preferably of from 12° to 40°, and coated and welded together by means of a crosslinked elastomeric material. Preferably, said reinforcing elements have a density of from 30 cords/dm to 75 cords/dm, preferably of from 40 cords/dm to 70 cords/dm, measured on said third belt layer (105c), in a circumferential direction, close to the equatorial plane (x-x) of the tire (100). Preferably, said reinforcing elements includes at least one preformed metal wire (see, for example, European Patent EP 1,141,477 in the name of the Applicant). Said external belt layer (105c) acts as a protection layer from stones or gravel possibly entrapped into the tread grooves (106b) and which may cause damages to the belt layers (105a), (105b) and (105d) and even to the carcass ply (101).

Alternatively, as above disclosed, said external belt layer (105c) is provided with reinforcing elements oriented in a substantially circumferential direction, thus forming an angle of a few degrees (i.e. 0°) with respect to the equatorial plane (x-x) of the tire (not represented in Fig. 1). Preferably, said reinforcing elements have a density of from 30 cords/dm to 80 cords/dm, preferably of from 40 cords/dm to 60 cords/dm, measured on said fourth belt layer (105c), in a circumferential direction, close to the equatorial plane (x-x) of the tire (100) (not represented in Fig. 1).

In the particular embodiment of Fig. 1, the axial width of the belt structure (105) corresponds to the axial width (L₃) of the second belt layer (105b), measured between its edges parallel to the axis of rotation of the tire (100). Preferably, the maximum width of the belt structure (105) is equal to 90% of the axial width of the tread band (106).

In the particular embodiment of Fig. 1, the first belt layer (105a) and the third belt layer (105d) have an axial width (L₂) which is lower than the axial width (L₃) of the second belt layer (105b), so that their axially external edges are staggered axially inwards by a predetermined distance with respect to the corresponding axially external edges of said second belt layer (105b). Usually, said predetermined distance is of from 2 mm to 80 mm, preferably of from 5 mm to 60 mm.

As already reported above, the lateral reinforcing layer (105e) has its axially external edge which is staggered axially inwards by a predetermined distance with respect to the axially external edge of said first belt layer (105a). Usually, said predetermined distance is of from 2 mm to 30 mm, preferably of from 5 mm to 15 mm.

The external belt layer (105c) has an axial width (L₁) which is lower than the axial width (L₂) of said third belt layer (105d), so that its axially external edge is staggered axially inwards with respect to the axially external edge of said third belt layer (105d). Preferably, said external belt layer (105c) covers a portion of at least 3%, preferably of from 10% to 95%, of said lateral reinforcing layer (105e).

Alternatively, said first belt layer (105a) has its axially external edge:
- staggered axially outwards with respect to the corresponding axially external edge of said second belt layer (105b) (not represented in Fig. 1); or
- in correspondence of the axially external edge of said second belt layer (105b) (not represented in Fig. 1); or
- in correspondence of the axially external edge of the wider belt layer (not represented in Fig. 1).

Alternatively, said third belt layer (105d) has its axially external edge:
- staggered axially outwards with respect to the corresponding axially external edge of said second belt layer (105b) (not represented in Fig. 1); or
- in correspondence of the axially external edge of said second belt layer (105b) (not represented in Fig. 1);
- in correspondence of the axially external edge of the wider belt layer (not represented in Fig. 1).

In the particular embodiment of Fig. 1, an insert (104) comprising a crosslinked elastomeric material is located at the buttress area, i.e. the area where the lateral edges of the tread band (106) is connected to the sidewall (103). Usually, the insert (104) is interposed between the carcass ply (101), the belt structure (105) and the sidewall (103).

An additional insert (104a) made of a crosslinked elastomeric material is located at the lateral internal edge of the lateral reinforcing layer (105e) and interposed between the carcass ply (101) and the first belt layer (105a).

Alternatively, at least two inserts comprising a crosslinked elastomeric material, each insert being substantially simmetrically arranged with respect to the equatorial plane of said tire, are applied between said first belt layer (105a) and said second belt layer (105b), each insert being applied in correpondence of the axially external edge of said first and second belt layer (not represented in Fig. 1).

Alternatively, at least two inserts comprising a crosslinked elastomeric material, each insert being substantially simmetrically arranged with respect to the equatorial plane of said tire, are applied between said second belt layer (105b) and said third belt layer (105d), each insert being applied in correspondence of the axially external edge of said second and fourth belt layer (not represented in Fig. 1).

A side wall (103) is applied externally onto the carcass ply (101), this sidewall extending, in an axially external position, from the bead (111) to the end of the belt structure (105).

A tread band (106), whose lateral edges are connected to the sidewall (103), is applied circumferentially in a position radially external to the belt structure (105). Externally, the tread band (106) has a rolling surface (106a) designed to come into contact with the ground. Circumferential grooves (106b) which are connected by transverse notches (not represented in Fig. 1) so as to define a tread pattern which comprises a plurality of blocks of various shapes and sizes distributed over the rolling surface. (106a) are generally made in this surface (106a).

In the case of tubeless tires, a rubber layer (102) generally known as a liner, which provides the necessary impermeability to the inflation air of the tire, may also be provided in an inner position relative to the carcass ply (101).

In Fig. 1, the section height (H) which refers to the radial distance from the nominal rim diameter to the outer diameter of the tire (100) at its equatorial plane (x-x), as well as the section width (W) which refers to the maximum linear distance parallel to the axis of the tire and between the exterior of its sidewalls (103), are also represented.

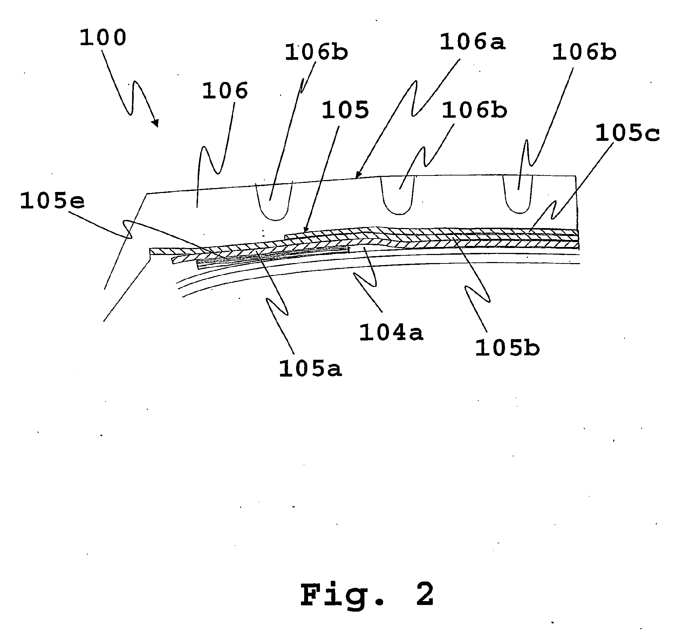

Fig. 2 shows an enlarged view in cross-section of a portion of a tire (100) having a structure as described in Fig. 1 wherein a belt structure (105) has two belt layers (105a) and (105b) and an external belt layer (105c), the belt layer (105d) being avoided.

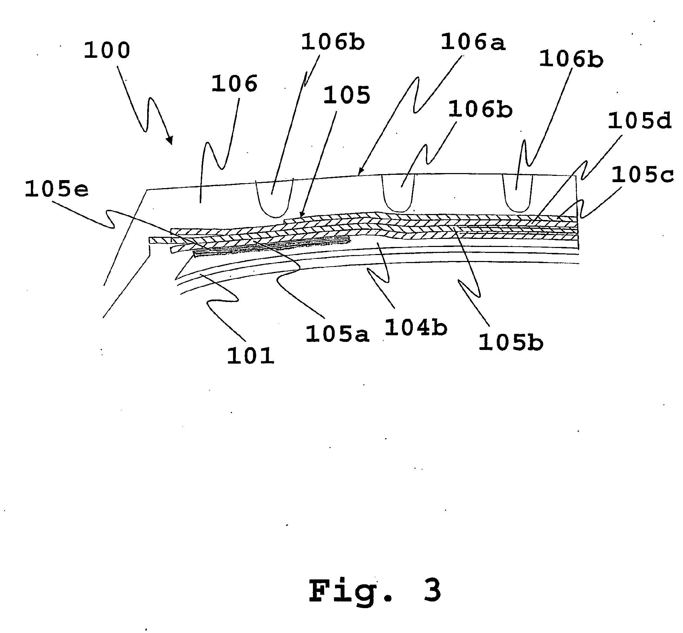

Fig. 3 shows an enlarged view in cross-section of a portion of a tire (100) having a structure as described in Fig. 1 wherein a belt underlayer (104b) is positioned between said belt structure (105) and said at least one carcass ply (101).

Said belt underlayer (104b) may comprise a crosslinked elastomeric material which may optionally include reinforcing cords usually made of textile fibers such as, for example, rayon, nylon, or polyethylene terephthalate.

In the particular embodiment of Fig. 3, said belt underlayer (104b) extends over a surface substantially corresponding to the surface of development of said belt structure (105).

Alternatively, said belt underlayer (104b) extends only along at least one portion of the development of said belt structure (105), for instance at opposite side portions of said belt structure (105), preferably extends at opposite side portions positioned under said lateral reinforcing layer (105e) (not represented in Fig. 3).

Said belt underlayer (104b) may have a variable thickness in the transversal direction: the thickness is greater near its outer edges than at a central zone or, alternatively, said belt underlayer (104b) may have uniform thickness.

## Claims

1. Tire comprising:
- a carcass structure (101) comprising at least one carcass ply, of a substantially toroidal shape, having opposite lateral edges associated with respective right-hand and left-hand bead structures (111) ;
- a belt structure (105) applied in a radially external position with respect to said carcass structure;
- a tread band (106) radially superimposed on said belt structure;
- two sidewalls (108), each sidewall being applied laterally on opposite sides with respect to said carcass structure;
said belt structure comprising:
- at least one pair of lateral reinforcing layers (105e) substantially simmetrically arranged with respect to the equatorial plane of said tire and applied in correspondence of the axially external portions of said tire belt structure, said lateral reinforcing layers incorporating reinforcing elements oriented in a substantially circumferential direction;
- a first belt layer (105a), radially superimposed on said at least one pair of lateral reinforcing layers (105e), provided with reinforcing elements parallel to one another and inclined with respect to the equatorial plane of said tire;
- a second belt layer (105b) radially superimposed on said first belt layer, provided with reinforcing elements parallel to one another and inclined with respect to the equatorial plane of said tire in a direction opposite to those of said first belt layer;
- an external belt layer (105c) applied in a radially external position with respect to said first and said second belt layers, said external belt layer being provided with reinforcing elements parallel to one another.

2. Tire according to claim 1, wherein each of said lateral reinforcing layers has an axial width lower than or equal to 40% with respect' to the axial width of the belt structure, said axial width corresponding to the axial width of the wider belt layer.

3. Tire according to claim 2, wherein each of said lateral reinforcing layers has an axial width of from 5% to 30% with respect to the axial width of the' belt structure, said axial width corresponding to the axial width of the wider belt layer.

4. Tire according to claim 3, wherein each of said lateral reinforcing layers has an axial width of from 10% to 25% with respect to the axial width of the belt structure, said axial width corresponding to the axial width of the wider belt layer.

5. Tire according to any one of the preceding claims, wherein said at least one pair of lateral reinforcing layers are positioned directly in contact with said carcass structure.

6. Tire according to any one of claims 1 to 4, wherein at least one belt underlayer is positioned between said belt structure and said carcass structure.

7. Tire according to any one of the preceding claims, wherein said at least one pair of lateral reinforcing layers have their axially external edges staggered axially inwards with respect to the corresponding axially external edges of said first belt layer.

8. Tire according to any one of the preceding claims, wherein said first belt layer has its axially external edges staggered axially inwards with respect to the corresponding axially external edges of said second belt layer.

9. Tire according to any one of the preceding claims, wherein said external belt layer has its axially external edges staggered axially inwards with respect to the corresponding axially external edges of said second belt layer.

10. Tire according to any one of claims 1 to 8, wherein said external belt layer has its axially external edges at an axially outward position with respect to the axially internal edges of said at least one pair of lateral reinforcing layers.

11. Tire according to any one of claim 1 to 8, wherein said external belt layer has its axially external edges at a position radially corresponding to the axially external edges of said at least one pair of lateral reinforcing layers.

12. Tire according to any one of the preceding claims, wherein the reinforcing elements of said external belt layer are inclined with respect to the equatorial plane of said tire.

13. Tire according to claim 12, wherein the reinforcing elements of said external belt layer are inclined in the same direction of the reinforcing element of said first belt layer.

14. Tire according to claim 12, wherein the reinforcing elements of said external belt layer are inclined in the same direction of the reinforcing element of said second belt layer.

15. Tire according to any one of claims 1 to 11, wherein the reinforcing elements of said external belt layer are oriented in a substantially circumferential direction.

16. Tire according to any one of the preceding claims, wherein said belt structure further comprises at least one additional pair of lateral reinforcing layers radially superimposed on said second belt layer substantially simmetrically arranged with respect to the equatorial plane of said tire and applied in correspondence of the axially external portions of said tire belt structure, said lateral reinforcing layers incorporating reinforcing elements oriented in a substantially circumferential direction.

17. Tire according to claim 16, wherein each of said lateral reinforcing layers is placed side-by-side with respect to said external belt layer.

18. Tire according to claim 16, wherein said at least one additional pair of lateral reinforcing layers have their axially external edges staggered axially inwards with respect to the corresponding axially external edges of at least one of said first and said second belt belt layers.

19. Tire according to claim 16, wherein said at least one additional pair of lateral reinforcing layers have their axially external edges in correspondence of the axially external edges at least one of said first and said second belt belt layers.

20. Tire according to any one of the preceding claims, wherein said belt structure further comprise an additional belt layer radially superimposed on said second belt layer, said additional belt layer being provided with reinforcing elements arranged parallel to one another and inclined with respect to the equatorial plane of said tire.

21. Tire according to claim 20, wherein the reinforcing elements of said additional' belt layer are inclined with respect to the equatorial plane of said tire in a direction opposite to those of said second belt layer.

22. Tire according to claim 20 or 21, wherein additional belt layer has its axially external edges staggered axially inwards with respect to the corresponding axially external edges of said second belt layer.

23. Tire according to any one of the preceding claims, which is a super single wide base heavy load vehicle tire.

24. Tire according to claim 23, having a section width (W) higher than or equal to 350 mm.

25. Tire according to claim 24, having a section width (W) of from 380 mm to 500 mm.

26. Tire according to any one of claims 23 to 25, having an aspect ratio [(H/W) x 100] lower than or equal to 80.

27. Tire according to claim 26, having an aspect ratio [(H/W) x 100] of from 30 to 70.

## Patentansprüche

1. Reifen, der umfasst:
- eine Karkassenstruktur (101), die wenigstens eine Karkassenlage einer im Wesentlichen toroidförmigen Gestalt umfasst, die gegenüberliegende seitliche Ränder aufweist, die mit entsprechenden rechten und linken Wulstrandstrukturen (111) assoziiert sind;
- eine Gürtelstruktur (105), die in einer radialen äußeren Position bezüglich der Karkassenstruktur angebracht ist;
- ein Laufflächenband (106), das radial auf der Gürtelstruktur überlagert ist;
- zwei Seitenwände (103), wobei jede Seitenwand auf gegenüberliegenden Seiten bezüglich der Karkassenstruktur seitlich angebracht sind;
wobei die Gürtelstruktur umfasst:
- wenigstens zwei seitliche Verstärkungsschichten (105e), die bezüglich der Äquatorebene des Reifens im Wesentlichen symmetrisch angeordnet sind und entsprechend den axialen äußeren Abschnitten der Reifengürtelstruktur angebracht sind, wobei die seitlichen Verstärkungsschichten Verstärkungselemente beinhalten, die im Wesentlichen in einer Umfangsrichtung ausgerichtet sind;
- eine erste Gürtelschicht (105a), die auf den wenigstens zwei seitlichen Verstärkungsschichten (105e) überlagert ist, die mit Verstärkungselementen parallel zueinander und bezüglich der Äquatorebene des Reifens geneigt vorgesehen sind;
- eine zweite Gürtelschicht (105b), die auf der ersten Gürtelschicht radial überlagert ist, die mit Verstärkungselementen parallel zueinander und bezüglich der Äquatorebene des Reifens in einer Richtung entgegengesetzt zu denen der ersten Gürtelschicht geneigt vorgesehen ist;
- eine äußere Gürtelschicht (105c), die in einer radialen äußeren Position bezüglich der ersten und zweiten Gürtelschicht angebracht ist, wobei die äußere Gürtelschicht mit Verstärkungselementen parallel zueinander vorgesehen ist.

2. Reifen nach Anspruch 1, bei dem jede der seitlichen Verstärkungsschichten eine axiale Breite aufweist, die kleiner oder gleich 40% bezüglich der axialen Breite der Gürtelstruktur ist, wobei besagte axiale Breite der axialen Breite der breiteren Gürtelschicht entspricht.

3. Reifen nach Anspruch 2, bei dem jede der seitlichen Verstärkungsschichten eine axiale Breite von 5% bis 30% der axialen Breite der Gürtelstruktur aufweist, wobei besagte axiale Breite der axialen Breite der breiteren Gürtelschicht entspricht.

4. Reifen nach Anspruch 3, bei dem jede der seitlichen Verstärkungsschichten eine axiale Breite von 10% bis 25% der axialen Breite der Gürtelstruktur aufweist, wobei besagte axiale Breite der axialen Breite der breiteren Gürtelschicht entspricht.

5. Reifen nach einem der vorhergehenden Ansprüche, bei dem die wenigstens zwei seitlichen Verstärkungsschichten direkt in Kontakt mit der Karkassenstruktur positioniert sind.

6. Reifen nach einem der vorhergehenden Ansprüche 1 bis 4, bei dem wenigstens eine Gürtelunterschicht zwischen der Gürtelstruktur und der Karkassenstruktur positioniert ist.

7. Reifen nach einem der vorhergehenden Ansprüche, bei dem die axialen äußeren Ränder der wenigstens zwei seitlichen Verstärkungsschichten mit Bezug auf die entsprechenden axialen äußeren Ränder der ersten Gürtelschicht axial nach innen versetzt sind.

8. Reifen nach einem der vorhergehenden Ansprüche, bei dem die axialen äußeren Ränder der ersten Gürtelschicht mit Bezug auf die entsprechenden axialen äußeren Ränder der zweiten Gürtelschicht axial nach innen versetzt sind.

9. Reifen nach einem der vorhergehenden Ansprüche, bei dem die axialen äußeren Ränder der äußeren Gürtelschicht mit Bezug auf die entsprechenden axialen äußeren Ränder der zweiten Gürtelschicht axial nach innen versetzt sind.

10. Reifen nach einem der vorhergehenden Ansprüche 1 bis 8, bei dem sich die axialen äußeren Ränder der äußeren Gürtelschicht mit Bezug auf die axialen inneren Ränder der wenigstens zwei seitlichen Verstärkungsschichten an einer axialen äußeren Position befinden.

11. Reifen nach einem der vorhergehenden Ansprüche 1 bis 8, bei dem die axialen äußeren Ränder der äußeren Gürtelschicht eine Position aufweisen, die den axialen äußeren Rändern der wenigstens zwei seitlichen Verstärkungsschichten radial entspricht.

12. Reifen nach einem der vorhergehenden Ansprüche, bei dem die Verstärkungselemente der äußeren Gürtelschicht mit Bezug auf die Äquatorebene des Reifens geneigt sind.

13. Reifen nach Anspruch 12, bei dem die Verstärkungselemente der äußeren Gürtelschicht in derselben Richtung wie das Verstärkungselement der ersten Gürtelschicht geneigt sind.

14. Reifen nach Anspruch 12, bei dem die Verstärkungselemente der äußeren Gürtelschicht in derselben Richtung wie das Verstärkungselement der zweiten Gürtelschicht geneigt sind.

15. Reifen nach einem der Ansprüche 1 bis 11, bei dem die Verstärkungselemente der äußeren Gürtelschicht im Wesentlichen in einer Umfangsrichtung ausgerichtet sind.

16. Reifen nach einem der vorhergehenden Ansprüche, bei dem die Gürtelstruktur ferner wenigstens zwei zusätzliche Verstärkungsschichten umfasst, die auf der zweiten Gürtelschicht radial überlagert sind, die mit Bezug auf die Äquatorebene des Reifens im Wesentlichen symmetrisch angeordnet ist und entsprechend der axialen äußeren Abschnitte der Reifengürtelstruktur angebracht ist,
wobei die seitlichen Verstärkungsschichten Verstärkungselemente beinhalten, die im Wesentlichen in einer Umfangsrichtung ausgerichtet sind.

17. Reifen nach Anspruch 16, bei dem jede der seitlichen Verstärkungsschichten Seite an Seite mit Bezug auf die äußere Gürtelschicht platziert ist.

18. Reifen nach Anspruch 16, bei dem die axialen äußeren Ränder der wenigstens zwei zusätzlichen seitlichen Verstärkungsschichten mit Bezug auf die entsprechenden axialen äußeren Ränder von wenigstens einer der ersten und zweiten Gürtelschichten axial nach innen versetzt sind.

19. Reifen nach Anspruch 16, bei dem die axialen äußeren Ränder der wenigstens zwei zusätzlichen seitlichen Verstärkungsschichten den axialen äußeren Rändern von wenigstens einer der ersten und zweiten Gürtelschichten entsprechen.

20. Reifen nach einem der vorhergehenden Ansprüche, bei dem die Gürtelstruktur ferner eine zusätzliche Gürtelschicht umfasst, die auf der zweiten Gürtelschicht überlagert ist, wobei die zusätzliche Gürtelschicht mit Verstärkungselementen vorgesehen ist, die parallel zueinander vorgesehen und mit Bezug auf die Äquatorebene des Reifens geneigt sind.

21. Reifen nach Anspruch 20, bei dem die Verstärkungselemente der zusätzlichen Gürtelschicht mit Bezug auf die Äquatorebene des Reifens in einer Richtung entgegengesetzt zu denen der zweiten Gürtelschicht geneigt sind.

22. Reifen nach Anspruch 20 oder 21, bei dem die axialen äußeren Ränder der zusätzlichen Gürtelgürtelschicht mit Bezug auf die entsprechenden axialen äußeren Ränder der zweiten Gürtelschicht axial nach innen versetzt sind.

23. Reifen nach einem der vorhergehenden Ansprüche, der ein Super-Schwerlastfahrzeugreifen mit breiter Basis ist.

24. Reifen nach Anspruch 23, der eine Reifenbreite (W) aufweist, die größer als oder gleich 350 mm ist.

25. Reifen nach Anspruch 24, der eine Reifenbreite (W) von 380 mm bis 500 mm aufweist.

26. Reifen nach einem der Ansprüche 23 bis 25, der ein Aspektverhältnis [(H/W) x 100] aufweist, das kleiner als oder gleich 80 ist.

27. Reifen nach Anspruch 26, der ein Aspektverhältnis [(H/W) x 100] von 30 bis 70 aufweist.

## Revendications

1. Pneu comprenant :
- une structure de carcasse (101) comportant au moins une couche de carcasse, de forme substantiellement toroïdale, dotée de bords latéraux opposés associés à des structures de talon respectives droite et gauche (111) ;
- une structure de ceinture (105) appliquée à un emplacement radialement extérieur par rapport à ladite structure de carcasse ;
- une bande de roulement (106) superposée radialement à ladite structure de ceinture ;
- deux joues (107), chaque joue étant appliquée latéralement sur des côtés opposés par rapport à ladite structure de carcasse ;
ladite structure de ceinture comprenant :
- au moins une paire de couches de renforcement latérales (1 05e), agencées substantiellement symétriquement par rapport au plan équatorial dudit pneu et appliquées de manière à correspondre avec les parties axialement externes de ladite structure de ceinture de pneu, lesdites couches de renforcement latérales incorporant des éléments de renforcement orientés dans une direction substantiellement circonférentielle ;
- une première couche de ceinture (105a), radialement superposée à au moins une paire de couches de renforcement latérales (105e) munies d'éléments de renforcement parallèles entre eux et inclinés par rapport au plan équatorial dudit pneu ;
- une deuxième couche de ceinture (105b) radialement superposée à ladite première couche de ceinture, munie d'éléments de renforcement parallèles entre eux et inclinés par rapport au plan équatorial dudit pneu dans une direction opposée à celle des éléments de renforcement de ladite première couche de ceinture ;
- une couche de ceinture externe (105c) appliquée à un emplacement radialement extérieur par rapport auxdites première et deuxième couches de ceinture, ladite couche de ceinture externe étant munie d'éléments de renforcement parallèles entre eux.

2. Pneu selon la revendication 1 dans lequel chacune desdites couches de renforcement latérales a une largeur axiale inférieure ou égale à 40 % de la largeur axiale de la structure de ceinture, ladite largeur axiale correspondant à la largeur axiale de la plus large couche de ceinture.

3. Pneu selon la revendication 2 dans lequel chacune desdites couches de renforcement latérales a une largeur axiale de 5 % à 30 % de la largeur axiale de la structure de ceinture, ladite largeur axiale correspondant à la largeur axiale de la plus large couche de ceinture.

4. Pneu selon la revendication 3 dans lequel chacune desdites couches de renforcement latérales a une largeur axiale de 10 % à 25 % de la largeur axiale de la structure de ceinture, ladite largeur axiale correspondant à la largeur axiale de la plus large couche de ceinture.

5. Pneu selon l'une quelconque des revendications qui précèdent dans lequel ladite au moins une paire de couches de renforcement latérales sont positionnées de manière à être directement en contact avec ladite structure de carcasse.

6. Pneu selon l'une quelconque des revendications 1 à 4 dans lequel au moins une sous-couche de ceinture est positionnée entre ladite structure de ceinture et ladite structure de carcasse.

7. Pneu selon l'une quelconque des revendications qui précèdent dans lequel ladite au moins une paire de couches de renforcement latérales ont leurs bords axialement externes décalés axialement vers l'intérieur par rapport aux bords axialement externes correspondants de ladite première couche de ceinture.

8. Pneu selon l'une quelconque des revendications qui précèdent dans lequel ladite première couche de ceinture à ses bords axialement externes décalés axialement vers l'intérieur par rapport aux bords axialement externes correspondants de ladite deuxième couche de ceinture.

9. Pneu selon l'une quelconque des revendications qui précèdent dans lequel ladite couche de ceinture externe a ses bords axialement externes décalés axialement vers l'intérieur par rapport aux bords axialement externes correspondants de ladite deuxième couche de ceinture.

10. Pneu selon l'une quelconque des revendications 1 à 8 dans lequel ladite couche de ceinture externe a ses bords axialement externes placés axialement vers l'extérieur par rapport aux bords axialement internes de ladite au moins une paire de couches de renforcement latérales.

11. Pneu selon l'une quelconque des revendications 1 à 8 dans lequel ladite couche de ceinture externe a ses bords axialement externes à un emplacement qui correspond radialement aux bords axialement externes desdites couches de renforcement latérales de ladite au moins une paire de couches de renforcement latérales.

12. Pneu selon l'une quelconque des revendications qui précèdent dans lequel les éléments de renforcement de ladite couche de ceinture externe sont inclinés par rapport au plan équatorial dudit pneu.

13. Pneu selon la revendication 12 dans lequel les éléments de renforcement de ladite couche de ceinture externe sont inclinés dans la même direction que les éléments de renforcement de ladite première couche de ceinture.

14. Pneu selon la revendication 12 dans lequel les éléments de renforcement de ladite couche de ceinture externe sont inclinés dans la même direction que les éléments de renforcement de ladite deuxième couche de ceinture.

15. Pneu selon l'une quelconque des revendications 1 à 11 dans lequel les éléments de renforcement de ladite couche de ceinture externe sont orientés dans une direction substantiellement circonférentielle.

16. Pneu selon l'une quelconque des revendications qui précèdent dans lequel ladite structure de ceinture comprend en outre au moins une paire supplémentaire de couches de renforcement latérales radialement superposées à ladite deuxième couche de ceinture, agencées substantiellement symétriquement par rapport au plan équatorial dudit pneu et appliquées de manière à correspondre avec les parties axialement externes de ladite structure de ceinture de pneu, lesdites couches de renforcement latérales incorporant des éléments de renforcement orientés dans une direction substantiellement circonférentielle.

17. Pneu selon la revendication 16 dans lequel chacune desdites couches de renforcement latérales est disposée côte à côte par rapport à ladite couche de ceinture externe.

18. Pneu selon la revendication 16 dans lequel ladite au moins une paire supplémentaire de couches de renforcement latérales ont leurs bords axialement externes décalés axialement vers l'intérieur par rapport aux bords axialement externes correspondants d'au moins une desdites première et deuxième couches de ceinture.

19. Pneu selon la revendication 16 dans lequel ladite au moins une paire supplémentaire de couches de renforcement latérales ont leurs bords axialement externes qui correspondent aux bords axialement externes d'au moins une desdites première et deuxième couches de ceinture.

20. Pneu selon l'une quelconque des revendications qui précèdent dans lequel ladite couche de ceinture comprend en outre une couche de ceinture supplémentaire radialement superposée à ladite deuxième couche de ceinture, ladite couche de ceinture supplémentaire étant munie d'éléments de renforcement agencés parallèlement l'un à l'autre et inclinés par rapport au plan équatorial dudit pneu.

21. Pneu selon la revendication 20 dans lequel les éléments de renforcement de ladite couche de ceinture supplémentaire sont inclinés par rapport au plan équatorial dudit pneu dans une direction opposée à celle des éléments de renforcement de ladite deuxième couche de ceinture.

22. Pneu selon la revendication 20 ou 21 dans lequel la couche de ceinture supplémentaire a ses bords axialement externes décalés axialement vers l'intérieur par rapport aux bords axialement externes correspondants de ladite deuxième couche de ceinture.

23. Pneu selon l'une quelconque des revendications qui précèdent, qui est un pneu large en monte simple pour véhicules poids lourd.

24. Pneu selon la revendication 23 ayant une largeur de section (W) supérieure ou égale à 350 mm.

25. Pneu selon la revendication 24 ayant une largeur de section (W) de 380 mm à 500 mm.

26. Pneu selon l'une quelconque des revendications 23 à 25 ayant un rapport d'aspect [(H/W) x 100] inférieur ou égal à 80.

27. Pneu selon la revendication 26 ayant un rapport d'aspect [(H/W) x 100] compris entre 30 et 70.
